# EUROPEAN PATENT APPLICATION

(11) **EP 2 818 951 A1**
(43) Date of publication of application: **31.12.2014**
(21) Application number: 13173323.0
(22) Date of filing: 24.06.2013
(51) Int. Cl.: G05B 19/418

(54) **Simulator for a power plant automation system and a method thereof**

(71) Applicant: Siemens Aktiengesellschaft, 80333 München (DE)
(72) Inventor: Gupta, Sourabh, 122001 Gurgaon (IN); Mehta, Manish, 122001 Gurgaon (IN)

(57) **Abstract**

A simulator (10) for simulating at least one component (52, 56, 58, 60, 62, 64) of a power plant automation system is presented. The simulator (10) includes a processor (13) adapted to generate display (50) of the at least one component (52, 56, 58, 60, 62, 64) of the power plant automation system, and a display unit (40) adapted to exhibit the generated display (50) of the at least one component (52, 56, 58, 60, 62, 64) of the power plant automation system, characterized in that the at least one component (52, 56, 58, 60, 62, 64) is exhibited on the display unit (40) as a realistic representation having one or more selectable options, wherein the one or more selectable options are selectable through an input device (42), and wherein each of the selectable options provide a corresponding operating condition for the at least one component (52, 56, 58, 60, 62, 64).

## Description

The present invention relates to a simulator and more particularly to a simulator for a power plant automation system.

An automation system, such as a power plant automation system is used for automatically controlling a process such as chemical, petroleum and so forth. These automation systems generally consist of individual components, which may include field level components with sensors and actuators, other devices with I/O level, network and communication devices.

Typically, a power plant is automatically controlled and monitored by a plurality of individual or interacting control and regulating functions of the automation system. As previously noted the automation system includes a number of data processing units or automation devices. In a large power plant, one or more automation systems which are typically sub-systems may be remotely located to control and monitor various field devices, such as sensors, valves and motors.

For operators and engineers to get acclimatized to the automation system, it is essential that they get training on operation and maintenance of power plants. Such type of training is not only limited to the Power plant Operators, but is also required for the maintenance and commissioning people and others who are also required to realize the actual hardware know-how, malfunctions and precautions to be taken in the I/O Room where they have to handle high voltage as well low voltage and handling of multiple types of hardware and their parameter settings.

Acclimatization to automation system and its components is carried out by using a simulator. The simulator includes an emulation computer which works as an automation processor and input/output processor for controlling the components in the automation system. The emulation computer includes a display which shows soft PLCs as input/output panels or control panels.

However, currently available simulators fail to provide a realistic view of the components along with the control panels and/or input/output panels. Hence, a person undergoing training fails to recognize different types of components such as controllers as well as their control panels and/or input/output panels.

It is therefore an object of the present invention to provide a simulator for a power plant automation system which is capable of providing realistic view of the components alongwith the control panels and input/output panels and further providing the user to get familiarized with the operation controls including the selectable options for preventing any malfunction in the component. Additionally, the simulator should be capable of creating malfunctions so that the user gets familiar with the malfunctions that may occur in the component.

The object is achieved by providing a simulator for a power plant automation system according to claim 1 and a method for simulating at least one component of a power plant automation system according to claim 13.

According to an aspect of the invention, a simulator for simulating at least one component of a power plant automation system is provided. The simulator includes a processor adapted to generate display of the at least one component of the power plant automation system, and a display unit adapted to exhibit the generated display of the at least one component of the power plant automation system, **characterized in that** the at least one component is exhibited on the display unit as a realistic representation having one or more selectable options, wherein the one or more selectable options are selectable through an input device, and wherein each of the selectable options provide a corresponding operating condition for the at least one component. By having the at least one component displayed as realistic representation an operator is able to visualize the components and also its functionalities by getting real life experience through the simulator.

In one embodiment, the at least one component comprise a control panel and/or input/output panel. By having control panels or input/output panels the operation of the components can be simulated.

In one embodiment, the realistic representation is a three-dimensional model of the at least one component. Three-dimensional model enables a user to visualize the components as a realistic view of the components showing various control panels and input/output panels.

In one embodiment, the selectable options include one or more parameters associated with the at least one component. This further enables to modify the parameters and visualize the working of the components when the selected parameters are chosen by an operator.

According to another aspect of the invention, a method for simulating an operation of at least one component in a power plant automation system is provided. The method includes generating display of the at least one component of the power plant automation system by a processor, exhibiting the generated display of the at least one component in a display unit, wherein the generated display is exhibited as a realistic representation having one or more selectable options, and selecting the one or more selectable options for providing an operating condition for the at least one component using an input device.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawings.
FIG. 1 is a schematic diagram of a simulator for a power plant automation system,
FIG. 2 is a schematic diagram depicting a simulated display of at least one component of the power plant automation system,
FIG. 3 is a flow chart depicting an exemplary method for simulating at least one component of a power plant automation system, in accordance with aspects of the present technique.

Embodiments of the present invention relate to a simulator for a power plant automation system. Simulator for a power plant automation system is used for imitation of the operation of a real-world automation system over time. The exemplary simulator as will be described hereinafter may be used for training purposes for the operators before the operators work on the real power plant automation system.

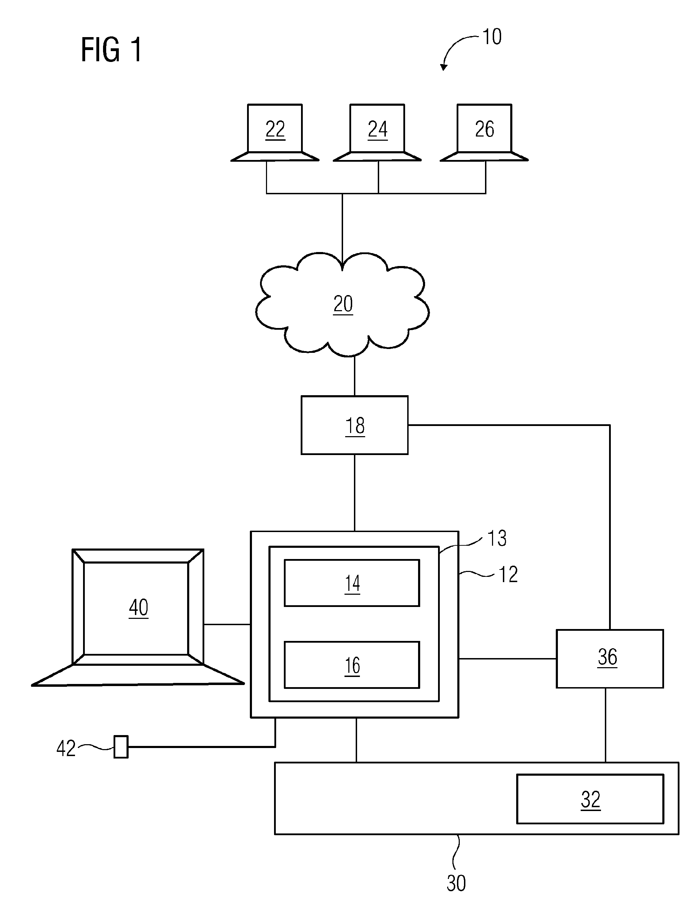

FIG. 1 is a schematic diagram depicting an exemplary simulator 10, which may be a machine or a computer with a set of controls designed to provide a realistic imitation of the power plant automation system. Alternatively, the simulator 10 may be a program enabling a computer to execute steps for providing a realistic imitation of the power plant automation system.

In accordance with aspects of the present technique, the simulator 10 includes a network of computers connected to each other via a network 20. The network 20 may be a local area network, a wide area network or internet. The simulator 10 may typically have a client-server configuration, wherein several client computers 22, 24, 26 are connected to at least one server computer 18. These client computers 22, 24, 26 are referred to as thin clients connected to the server 18, which is an application server in the presently contemplated configuration.

In the presently contemplated configuration, the server 18 is connected to thin clients 22, 24, 26 via network 20. As an example, the thin clients may be computers having a user interface which is typically a human machine interface (HMI). Alternatively, the user interface may also be a touch user interface, a graphical user interface, a command line interface or combinations thereof. The user interface enables a user which is generally an operator to monitor and/or control the process in a plant. Furthermore, the user interface also enables a user to enter data and also view the output associated with the components, the output may include for example pressure in the component, the temperature, air flow rate and so forth.

The simulator 10 includes an emulation computer also referred to as an emulator 12. The emulator 12 includes a processor 13 having a first module 14 and a second module 16. The first module 14 is typically an automation module and the second module 16 is an input/output or an I/O module.

The emulator 12 includes soft programmable logic controllers or softPLCs, which are typically software which emulates the functionality of a standard PLC inside a computer.

In accordance with aspects of the present technique, the first module 14 is configured for emulation at the automation level. The second module 16 is configured to process input output signals which are received from a process model computer.

The simulator 10 includes an instruction station computer 36 which is configured to control the state of the units connected to it. Instructions may be initiated by a user from the instruction station computer 36. The user which is typically an instructor, who is able to control the training process through the instruction station computer 36. Furthermore, the instruction station computer 36 is configured to create simulated environments such as but not limited to plant conditions, creating a number of malfunctions that may occur in at least one component. Additionally, the instruction station computer 36 is also configured to monitor and analyze a trainee's performance.

The instruction station computer 36 is connected to the application server 18, the emulator 12 and the process model computer 30, which includes a process module 32. The instruction station computer 36 issues commands to the connected application server 18, the emulator 12 and the process model computer 30 for controlling the functions of the application server 18, the emulator 12 and the process model computer 30 respectively.

The process model computer 30 is connected to the emulator 12 and the instruction station computer 36. The one or more processes running in a power plant are modeled in the process model computer and the data is provided to the emulator. The data is in the form of signals or processes commands which are exchanged with the emulator 12. Furthermore, the process model computer 30 is used to simulate the process engineering components and controls of the power plant process.

In accordance with aspects of the present technique, the emulator 12 receives data from the process model computer 30. The processor 13 in the emulator 12 generates displays of the at least one component of the power plant system, which are thereafter exhibited in a display unit 40, i.e. presented to be viewed or displayed in the display unit 40.

More particularly, the emulator 12 receives data, which includes signals or commands from the process model computer 30, the application server 18 and the instruction station computer 36. The data is processed by the processor 13 to generate displays of the at least one component of the power plant system, which are thereafter exhibited in the display unit 40.

In the presently contemplated configuration, the at least one component is displayed as a realistic representation. As used herein the term "realistic representation" means a representation of components or parts thereof of the power plant automation system, as they actually are. The realistic representation may be a two-dimensional model of the component. Alternatively, the realistic representation may be a three-dimensional model of the component. As used herein, the term "model" means an imitation or emulation, and includes any reconstruction or depiction besides an exact image. In one embodiment, the realistic representation is a two-dimensional image of the component. In an alternate embodiment, the realistic representation is a three-dimensional image of the component.

In accordance with aspects of the present technique, the realistic representation may also be achieved using a virtual reality which is a term applied to a computer-simulated environment that can simulate real world just as imaginary world. A virtual reality may provide for the user a large variety of means of interaction with the process. It could simulate the room of the power plant and may also provide an operator with a feeling, as if he was walking through the location.

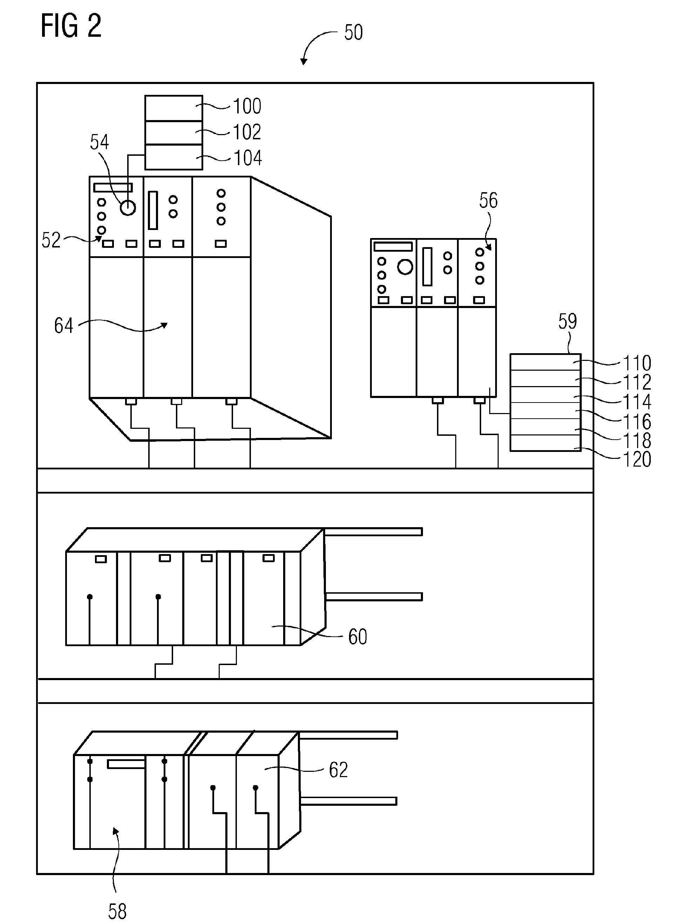

Referring now to FIG. 2, a schematic diagram depicting a simulated display of the at least one component of the power plant automation system is presented. The display 50 includes at least one component 52, 56, 58, 60, 62, 64. The at least one component include a power supply unit 52, a programmable logic controller 64, a communication unit 56, I/O cards 60, 62 and a power supply unit 58 for I/O card 62.

It may be noted that the at least one component 52, 56, 58, 60, 62, 64 include a control panel and/or an input/output panel. The control panel includes controls for operating the component. The input/output panel may include data input/output channels/ports, data cable slots and so forth.

In accordance with aspects of the present technique, the simulated power supply unit 52 includes a power supply button 54. The input device 42 which may be a keyboard, a mouse or a touch sensitive surface such as a touch screen may be used to display one or more selectable options by for example using a right click button in the mouse.

In the presently contemplated configuration, the power supply button 54 includes selectable options 100, 102, 104 in the form of a menu. Reference numeral 100 is representative of "ON" function, reference numeral 102 is representative of "OFF" function and reference numeral 104 is representative of "Remove Battery" function. The selectable options 100, 102, 104 may be selected using the input device 42 of FIG. 1.

Similarly, one or more selectable options 110, 112, 114, 116, 118, 120 are displayed a menu 59 for the communication unit 56. These selectable options 110, 112, 114, 116, 118, 120 may be selected using the input device 42 for performing a desired function from the list of selectable options 110, 112, 114, 116, 118, 120.

In one embodiment, the selectable options 110, 112, 114, 116, 118, 120 may include one or more parameters associated with the communication unit 56.

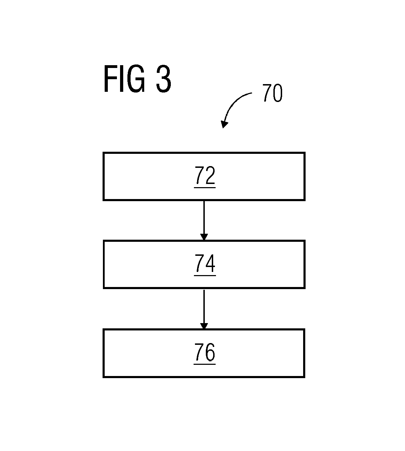

FIG. 3 is a flow chart depicting an exemplary method 70 for simulating at least one component of a power plant automation system. The method 70 includes generating display of the at least one component in the power plant automation system by a processor 13 of the emulation computer 12, as at step 72.

At step 74, the generated display 50 is exhibited in a display unit 40, wherein the generated display 50 is exhibited as a realistic representation having one or more selectable options.

At step 76, the one or more selectable options are selected for providing an operating condition for the at least one component using an input device, such as the input device 42 of FIG. 1. On selecting the selectable options, the display unit 40 depicts the realistic view of the event which occurs due to the selected option. As an example, if function of "ON" is selected from one or more selectable options for the power supply button 54, a green light indicator in the power supply unit 52 glows, giving the realistic view or representation.

As previously noted, the realistic representation may include a three-dimensional model, a two-dimensional model, a two-dimensional image and a three-dimensional image of the component. Furthermore, as previously noted the realistic representation may also include a virtual reality which may be achieved using a computer simulated environment.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

### List of reference signs

- 10: simulator
- 12: emulator
- 13: processor
- 14: first module
- 16: second module
- 18: application server
- 20: network
- 22,24,26: thin clients
- 30: process model computer
- 32: process module
- 36: instruction station computer
- 40: display unit
- 42: input device
- 50: display
- 52: power supply unit
- 54: power supply button
- 56: communication unit
- 58: power supply unit
- 59: menu
- 60: I/O card
- 62: I/O card
- 64: programmable logic controller
- 70: method
- 72-76: steps of the method
- 100, 102, 104: selectable options
- 110, 112, 114, 116, 118, 120: selectable options

## Claims

1. A simulator (10) for simulating at least one component (52, 56, 58, 60, 62, 64) of a power plant automation system, the simulator (10) comprising:
- a processor (13) adapted to generate display (50) of the at least one component (52, 56, 58, 60, 62, 64) of the power plant automation system, and
- a display unit (40) adapted to exhibit the generated display (50) of the at least one component (52, 56, 58, 60, 62, 64) of the power plant automation system,
**characterized in that**
the at least one component (52, 56, 58, 60, 62, 64) is exhibited on the display unit (40) as a realistic representation having one or more selectable options, wherein the one or more selectable options are selectable through an input device (42), and wherein each of the selectable options provide a corresponding operating condition for the at least one component (52, 56, 58, 60, 62, 64).

2. The simulator (10) according to claim 1, wherein the processor (13) comprises a first module (14) configured for emulation at the automation level and a second module (16) for processing the input/output signals.

3. The simulator (10) according to claim 1, wherein the input device (42) is a mouse or a keyboard or a touch sensitive surface.

4. The simulator (10) according to any of the claims 1 to 3, wherein the realistic representation is a three-dimensional model of the at least one component (52, 56, 58, 60, 62, 64).

5. The simulator (10) according to any of the claims 1 to 3, wherein the realistic representation is a two-dimensional model of the at least one component (52, 56, 58, 60, 62, 64).

6. The simulator (10) according to any of the claims 1 to 3, wherein the realistic representation is a two-dimensional image of the at least one component (52, 56, 58, 60, 62, 64).

7. The simulator (10) according to any of the claims 1 to 3, wherein the realistic representation is a three-dimensional image of the at least one component (52, 56, 58, 60, 62, 64).

8. The simulator (10) according to any of the claims 1 to 3, wherein the realistic representation is a virtual reality.

9. The simulator (10) according to any of the claims 1 to 8, wherein the at least one component comprise a programmable logic controller (64).

10. The simulator (10) according to any of the claims 1 to 8, wherein the at least one component comprises input/output cards (60, 62).

11. The simulator (10) according to any of the claims 1 to 8, wherein the at least one component comprise a power supply unit (52).

12. The simulator (10) according to any of the claims 1 to 11, wherein the selectable options comprise one or more parameters associated with the at least one component (52, 56, 58, 60, 62, 64).

13. A method (70) for simulating at least one component (52, 56, 58, 60, 62, 64) of a power plant automation system, comprising
- generating (72) a display of the at least one component (52, 56, 58, 60, 62, 64) of the power plant automation system by a processor (13),
- exhibiting (74) the generated display (50) of the at least one component (52, 56, 58, 60, 62, 64) in a display unit (40), wherein the generated display (50) is exhibited as a realistic representation having one or more selectable options, and
- selecting (76) the one or more selectable options for providing an operating condition for the at least one component (52, 56, 58, 60, 62, 64) using an input device (42).
